# EUROPEAN PATENT APPLICATION

(11) **EP 4 583 057 A1**
(43) Date of publication of application: **09.07.2025**
(21) Application number: 23870409.2
(22) Date of filing: 15.09.2023
(51) Int. Cl.: G06T 11/20

(54) **MAP CONSTRUCTION METHOD AND APPARATUS, AND VEHICLE**

(30) Priority: 26.09.2022 CN 202211175868
(71) Applicant: Shenzhen Yinwang Intelligent Technologies Co., Ltd., Shenzhen, Guangdong 518129 (CN)
(72) Inventor: ZHANG, Chao, Shenzhen, Guangdong 518129 (CN); LIU, Hongma, Shenzhen, Guangdong 518129 (CN)
(74) Representative: Thun, Clemens
(86) International application number: PCT/CN2023/119215
(87) International publication number: WO 2024/067175

(57) **Abstract**

Embodiments of this application provide a map construction method and apparatus, and a vehicle. The method includes: obtaining map information, where the map information includes a first parking space set, and the first parking space set includes one or more parking spaces; performing forward rotation transformation on the one or more parking spaces, to obtain a first bounding box, where the first bounding box includes the one or more parking spaces; arranging the one or more parking spaces based on dimensions of the first bounding box and preset parking space dimensions; and performing inverse rotation transformation on the one or more arranged parking spaces, to obtain one or more repaired parking spaces. Embodiments of this application may be applied to an intelligent vehicle or an electric vehicle, to help improve efficiency of repairing a parking space on a map, reduce labor costs, and improve an intelligence degree of a vehicle.

## Description

This application claims priority to Chinese Patent Application No. 202211175868.6, filed with the China National Intellectual Property Administration on September 26, 2022 and entitled "MAP CONSTRUCTION METHOD AND APPARATUS, AND VEHICLE", which is incorporated herein by reference in its entirety.

### TECHNICAL FIELD

Embodiments of this application relate to the field of intelligent vehicles, and more specifically, to a map construction method and apparatus, and a vehicle.

### BACKGROUND

Parking spaces are an important part of a parking lot map. Currently, a vehicle can repair the parking spaces on the parking lot map through offline repair. However, this approach is time-consuming and causes relatively high labor costs.

### SUMMARY

Embodiments of this application provide a map construction method and apparatus, and a vehicle, to help improve efficiency of repairing a parking space on a map, reduce labor costs, and improve an intelligence degree of a vehicle.

The vehicle in this application may be a vehicle in a broad sense, and may be a transportation means (for example, a commercial vehicle, a passenger vehicle, a motorcycle, a flight vehicle, or a train), an industrial vehicle (for example, a forklift, a trailer, or a tractor), an engineering vehicle (for example, an excavator, a bulldozer, or a crane), an agricultural device (for example, a lawn mower or a harvester), a recreation device, or a toy vehicle. A type of the vehicle is not specifically limited in embodiments of this application.

According to a first aspect, a map construction method is provided. The method includes: obtaining map information, where the map information includes a first parking space set, and the first parking space set includes one or more parking spaces; performing forward rotation transformation on the one or more parking spaces, to obtain a first bounding box, where the first bounding box is determined by a rectangular box including outermost points of the one or more parking spaces; arranging the one or more parking spaces based on dimensions of the first bounding box and preset parking space dimensions; and performing inverse rotation transformation on the one or more arranged parking spaces, to obtain one or more repaired parking spaces.

In this embodiment of this application, forward rotation transformation is performed on the one or more parking spaces to obtain the bounding box, and the one or more parking spaces are arranged based on the dimensions of the bounding box and the preset parking space dimensions. After inverse rotation transformation is performed, the one or more repaired parking spaces may be obtained. In this way, there is no need to repair the parking space on the map through offline repair, which helps reduce labor costs and also helps improve an intelligence degree of a vehicle.

In some possible implementations, the method further includes: determining a transformation angle based on orientation angles of the one or more parking spaces. The performing forward rotation transformation on the one or more parking spaces includes: performing forward rotation transformation on the one or more parking spaces based on the transformation angle.

In some possible implementations, the performing forward rotation transformation on the one or more parking spaces based on the transformation angle includes: performing forward rotation transformation around a preset point based on the transformation angle.

In some possible implementations, the preset point may be an origin of an Odom coordinate system or another point in the Odom coordinate system.

In some possible implementations, the preset point may alternatively be a point in another coordinate system (for example, a vehicle coordinate system).

In some possible implementations, the first bounding box includes the outermost points of the one or more parking spaces in the first parking space set.

In some possible implementations, the preset parking space dimensions are dimensions obtained through weighted averaging performed on dimensions of all parking spaces on the map; the preset parking space dimensions are dimensions obtained through weighted averaging performed on dimensions of the one or more parking spaces; or a length of a parking space and a width of a parking space in the preset parking space dimensions are preset values (for example, a length and a width of a standard parking space).

In some possible implementations, when the one or more parking spaces are the plurality of parking spaces, a distance between the plurality of parking spaces is less than or equal to a preset distance, and/or a difference between orientation angles of every two of the plurality of parking spaces is less than or equal to a preset angle.

With reference to the first aspect, in some implementations of the first aspect, the arranging the one or more parking spaces based on dimensions of the first bounding box and preset parking space dimensions includes: determining, based on the dimensions of the first bounding box and the preset parking space dimensions, quantities of rows and columns of parking spaces included in the first bounding box; and arranging the one or more parking spaces based on the quantities of rows and columns of the parking spaces included in the first bounding box.

In this embodiment of this application, the quantities of rows and columns of the parking spaces included in the first bounding box may be determined based on the dimensions of the first bounding box and the preset parking space dimensions, so that the parking spaces are rearranged based on the quantities of rows and columns, to obtain parking spaces that are neatly arranged. There is no need to repair the parking space on the map through offline repair, which helps reduce labor costs. In addition, it helps improve aesthetics and accuracy of a constructed map, and also helps improve an intelligence degree of the vehicle.

With reference to the first aspect, in some implementations of the first aspect, the map information further includes a second parking space set, the second parking space set includes one or more parking spaces, and the method further includes: performing forward rotation transformation on the one or more parking spaces in the second parking space set, to obtain a second bounding box; and adjusting the first bounding box and/or the second bounding box when the first bounding box and the second bounding box overlap, to cause the first bounding box and the second bounding box not to overlap.

In this embodiment of this application, when the first bounding box and the second bounding box overlap, the first bounding box and/or the second bounding box may be adjusted, to cause the first bounding box and the second bounding box not to overlap. This helps prevent the repaired parking spaces from overlapping, and helps improve the aesthetics of the constructed map.

In some possible implementations, the adjusting the first bounding box and/or the second bounding box when the first bounding box and the second bounding box overlap includes: adjusting the second bounding box when the first bounding box and the second bounding box overlap and a quantity of visually detected parking spaces in the first bounding box is greater than a quantity of visually detected parking spaces in the second bounding box.

With reference to the first aspect, in some implementations of the first aspect, the method further includes: aligning the first bounding box with the second bounding box along a preset direction.

In this embodiment of this application, when the first bounding box and the second bounding box are not aligned along the preset direction, the first bounding box and the second bounding box may be aligned along the preset direction. This helps ensure that a parking space in a first parking space set after repair and a parking space in a second parking space set after repair are aligned along the preset direction. The parking space obtained through inverse rotation transformation is also aligned along a specific direction. This helps improve the aesthetics of the constructed map.

In some possible implementations, the preset direction is a first side of the first bounding box, or the preset direction is a second side of the second bounding box.

In some possible implementations, when the quantity of visually detected parking spaces in the first bounding box is greater than the quantity of visually detected parking spaces in the second bounding box, the preset direction may be determined as the first side of the first bounding box.

With reference to the first aspect, in some implementations of the first aspect, before the one or more repaired parking spaces are obtained, the method further includes: determining that the one or more repaired parking spaces and the one or more parking spaces before repair match.

In this embodiment of this application, match between the one or more repaired parking spaces and the one or more parking spaces before repair may be performed. In this way, a parking space that does not exist in an actual scenario can be excluded, helping improve the accuracy of the constructed map.

With reference to the first aspect, in some implementations of the first aspect, the method further includes: when opening orientations of at least some parking spaces of the one or more parking spaces do not correspond to a direction of a road, adjusting the opening orientations of the at least some parking spaces to correspond to the direction of the road.

In this embodiment of this application, when the opening orientations of the at least some parking spaces of the one or more parking spaces do not correspond to the direction of the road, the opening orientations of the at least some parking spaces may be adjusted to correspond to the direction of the road. In this way, all openings of the one or more parking spaces obtained through repair may correspond to the direction of the road, helping improve the aesthetics of the constructed map.

With reference to the first aspect, in some implementations of the first aspect, the method further includes: aligning associated elements in the one or more parking spaces, where the associated element includes a parking lock and/or a wheel stop.

In this embodiment of this application, when the one or more parking spaces include the associated elements, the associated elements may be further aligned, to help improve the aesthetics of the constructed map.

With reference to the first aspect, in some implementations of the first aspect, the method further includes: when the one or more parking spaces are located between two obstacles, adjusting, based on a dimension between the two obstacles, dimensions of the one or more parking spaces in a first direction, where the first direction corresponds to a direction of a connection line between the two obstacles.

In this embodiment of this application, after the one or more parking spaces are obtained through repair, the dimensions of the one or more parking spaces in the first direction may be further modified based on a distance between the two obstacles. In this way, dimensions of the repaired parking space are more accurate, also helping improve the accuracy of the constructed map.

With reference to the first aspect, in some implementations of the first aspect, the method further includes: obtaining the first parking space set from the map information according to a k-nearest neighbors algorithm or a union-find algorithm.

In this embodiment of this application, the first parking space set may be obtained by using the k-nearest neighbors algorithm or the union-find algorithm. This helps improve accuracy of repairing the one or more parking spaces in the first parking space set.

With reference to the first aspect, in some implementations of the first aspect, the obtaining map information includes: obtaining the map information when automatic parking of a vehicle is detected.

In this embodiment of this application, during the automatic parking of the vehicle, the map information may be obtained based on data collected by a sensor. Parking spaces in original map information may be disordered and not aligned. According to the map construction method in embodiments of this application, the parking spaces in the map information can be repaired in real time, to construct and obtain a map that is arranged neatly and beautifully. This helps improve user experience, and also helps improve the intelligence degree of the vehicle.

In some possible implementations, the obtaining map information includes: when it is detected that the vehicle moves into a parking lot for the first time, obtaining map information of the parking lot.

Alternatively, if it is detected that the vehicle moves into a parking lot for the first time and a parking lot map has not been fully constructed, when the vehicle enters the parking lot for the second time, a complete parking lot map may be further constructed based on the data collected by the sensor, and parking spaces on the parking lot map may be repaired.

In some possible implementations, the method further includes: controlling a vehicle-mounted display screen to display the map information, where the map information includes the one or more repaired parking spaces.

According to a second aspect, a map construction apparatus is provided. The apparatus includes: an obtaining unit, configured to obtain map information, where the map information includes a first parking space set, and the first parking space set includes one or more parking spaces; a transformation unit, configured to perform forward rotation transformation on the one or more parking spaces, to obtain a first bounding box, where the first bounding box is determined by a rectangular box including outermost points of the one or more parking spaces; and an arrangement unit, configured to arrange the one or more parking spaces based on dimensions of the first bounding box and preset parking space dimensions. The transformation unit is further configured to perform inverse rotation transformation on the one or more arranged parking spaces, to obtain one or more repaired parking spaces.

With reference to the second aspect, in some implementations of the second aspect, the arrangement unit is configured to: determine, based on the dimensions of the first bounding box and the preset parking space dimensions, quantities of rows and columns of parking spaces included in the first bounding box; and arrange the one or more parking spaces based on the quantities of rows and columns of the parking spaces included in the first bounding box.

With reference to the second aspect, in some implementations of the second aspect, the map information further includes a second parking space set, and the second parking space set includes one or more parking spaces. The transformation unit is further configured to perform forward rotation transformation on the one or more parking spaces in the second parking space set, to obtain a second bounding box. The apparatus further includes: a first adjustment unit, configured to adjust the first bounding box and/or the second bounding box when the first bounding box and the second bounding box overlap, to cause the first bounding box and the second bounding box not to overlap.

With reference to the second aspect, in some implementations of the second aspect, the apparatus further includes: a first alignment unit, configured to align the first bounding box with the second bounding box along a preset direction.

With reference to the second aspect, in some implementations of the second aspect, the apparatus further includes: a determining unit, configured to: before the one or more repaired parking spaces are obtained, determine that the one or more repaired parking spaces and the one or more parking spaces before repair match.

With reference to the second aspect, in some implementations of the second aspect, the apparatus further includes: a second adjustment unit, configured to: when opening orientations of at least some parking spaces of the one or more parking spaces do not correspond to a direction of a road, adjust the opening orientations of the at least some parking spaces to correspond to the direction of the road.

With reference to the second aspect, in some implementations of the second aspect, the apparatus further includes: a second alignment unit, configured to align associated elements in the one or more parking spaces, where the associated element includes a parking lock and/or a wheel stop.

With reference to the second aspect, in some implementations of the second aspect, the apparatus further includes: a third adjustment unit, configured to: when the one or more parking spaces are located between two obstacles, adjust, based on a dimension between the two obstacles, dimensions of the one or more parking spaces in a first direction, where the first direction corresponds to a direction of a connection line between the two obstacles.

With reference to the second aspect, in some implementations of the second aspect, the obtaining unit is further configured to obtain the first parking space set from the map information according to a k-nearest neighbors algorithm or a union-find algorithm.

With reference to the second aspect, in some implementations of the second aspect, the obtaining unit is configured to obtain the map information when automatic parking of a vehicle is detected.

According to a third aspect, a map construction apparatus is provided. The apparatus includes a processing unit and a storage unit. The storage unit is configured to store instructions, and the processing unit executes the instructions stored in the storage unit, so that the apparatus performs the method according to any one of the first aspect.

Optionally, the processing unit may include at least one processor. The storage unit may be a memory. The memory may be a storage unit (for example, a register or a cache) in a chip, or may be a storage unit (for example, a read-only memory or a random access memory) that is in a vehicle and that is outside the chip.

According to a fourth aspect, a map construction system is provided. The system includes one or more sensors and a computing platform, and the computing platform includes the apparatus according to any one of the second aspect or the third aspect.

According to a fifth aspect, a vehicle is provided. The vehicle includes the apparatus according to any one of the second aspect or the third aspect, or includes the system according to the fourth aspect.

According to a sixth aspect, a server is provided. The server includes the apparatus according to any one of the second aspect or the third aspect.

According to a seventh aspect, a computer program product is provided. The computer program product includes computer program code. When the computer program code is run on a computer, the computer is enabled to perform the method according to any one of the first aspect.

It should be noted that all or some of the computer program code may be stored in a first storage medium. The first storage medium may be packaged together with a processor, or may be packaged separately from a processor. This is not specifically limited in embodiments of this application.

According to an eighth aspect, a computer readable medium is provided. The computer readable medium stores program code. When the computer program code is run on a computer, the computer is enabled to perform the method according to any one of the first aspect.

According to a ninth aspect, an embodiment of this application provides a chip system. The chip system includes a circuit, and the circuit is configured to perform the method according to any one of the first aspect.

### BRIEF DESCRIPTION OF DRAWINGS

FIG. 1 is a functional block diagram of a vehicle according to an embodiment of this application;
FIG. 2 is a parking space map before repair according to an embodiment of this application;
FIG. 3 is a schematic flowchart of a map construction method according to an embodiment of this application;
FIG. 4 is a diagram of five local clusters according to an embodiment of this application;
FIG. 5(a) to FIG. 5(c) are diagrams of performing forward rotation transformation and inverse rotation transformation on a local cluster a according to an embodiment of this application;
FIG. 6 is a diagram of causing a bounding box 1 and a bounding box 2 not to overlap according to an embodiment of this application;
FIG. 7 is a diagram of aligning five bounding boxes according to an embodiment of this application;
FIG. 8 is a diagram of matching a parking space obtained through inverse rotation with an original parking space according to an embodiment of this application;
FIG. 9 is a diagram of a repaired parking lot map according to an embodiment of this application;
FIG. 10 is a schematic flowchart of another map construction method according to an embodiment of this application; and
FIG. 11 is a block diagram of a map construction apparatus according to an embodiment of this application.

### DESCRIPTION OF EMBODIMENTS

The following describes technical solutions in embodiments of this application with reference to accompanying drawings in embodiments of this application. In the description of embodiments of this application, "/" represents "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists.

The prefix words such as "first" and "second" in embodiments of this application are merely intended to distinguish between different objects, and impose no limitation on locations, sequences, priorities, quantities, content, or the like of the described objects. In embodiments of this application, use of the prefix words such as an ordinal number that is used to distinguish between the described objects does not constitute a limitation on the described objects. For a description of the described objects, refer to the description of the context in the claims or embodiments. The use of such prefix words should not constitute an unnecessary limitation. In the description of embodiments, unless otherwise specified, "a plurality of" means two or more.

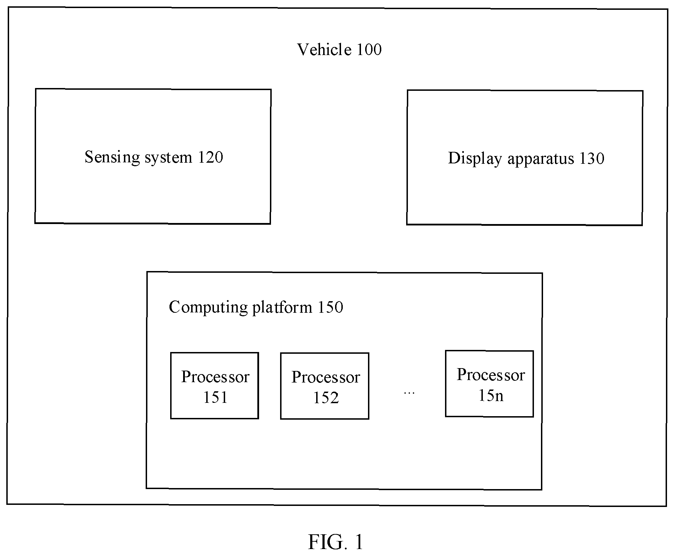

FIG. 1 is a functional block diagram of a vehicle 100 according to an embodiment of this application. The vehicle 100 may include a sensing system 120, a display apparatus 130, and a computing platform 150. The sensing system 120 may include one or more sensors that sense information about an environment around the vehicle 100. For example, the sensing system 120 may include a positioning system. The positioning system may be a global positioning system (global positioning system, GPS), a BeiDou system, or another positioning system. The sensing system 120 may further include one or more of an inertia measurement unit (inertial measurement unit, IMU), a lidar, a millimeter-wave radar, an ultrasonic radar, and an image shooting apparatus.

Some or all functions of the vehicle 100 may be controlled by the computing platform 150. The computing platform 150 may include one or more processors, for example, processors 151 to 15n (n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory, to implement a corresponding function.

The display apparatus 130 in a cockpit is mainly classified into two types: a first type is a vehicle-mounted display screen, and a second type is a projection display screen, for example, a head-up display (head up display, HUD) apparatus. The vehicle-mounted display screen is a physical display screen, and is an important part of the vehicle-mounted information entertainment system. A plurality of display screens may be disposed in the cockpit, for example, a digital instrument display screen, a central control screen, a display screen in front of a passenger on a front passenger seat (also referred to as a front passenger), a display screen in front of a passenger on a left rear passenger seat, a display screen in front of a passenger on a right rear passenger seat. Even a vehicle window may be used as a display screen for display. The head-up display, also referred to as a head-up display system, is mainly used to display driving information such as speed and navigation on a display device in front of a driver (for example, a windshield), to reduce line-of-sight shifting time of the driver, so that a pupil change caused by line-of-sight shifting of the driver, and driving safety and comfort are improved. For example, the HUD includes a combiner head-up display (combiner-HUD, C-HUD) system, a windshield head-up display (windshield-HUD, W-HUD) system, and an augmented reality head-up display (augmented reality HUD, AR-HUD) system. It should be understood that the HUD may also have another type of system with technology evolution. This is not limited in this application.

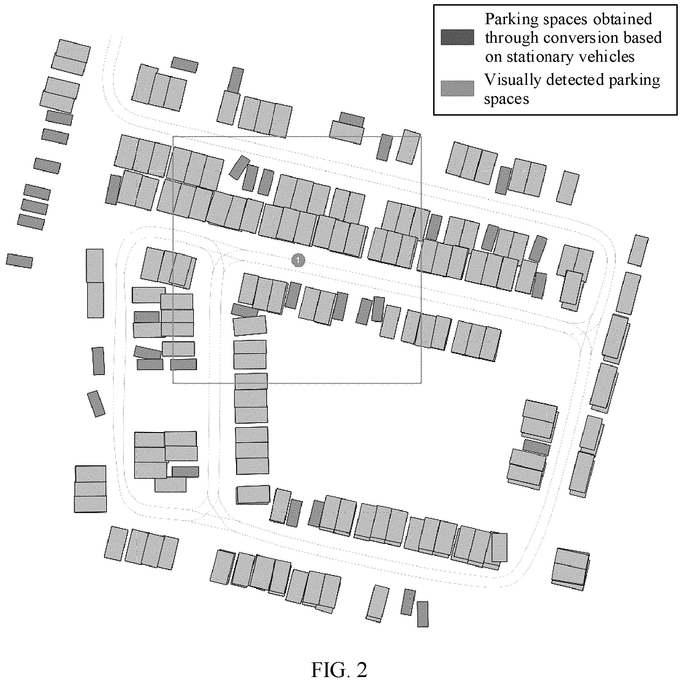

FIG. 2 is a parking space map before repair according to an embodiment of this application. The parking space map may be a parking space map determined by using a parking space detection system and a positioning system. The positioning system may include a global positioning system, an inertia measurement unit, and a wheel Odometer. As shown in FIG. 2, when a vehicle enters a specific parking lot, a parking lot map may be collected by using an image shooting apparatus outside a cockpit in a process of driving in the parking lot.

For example, the parking space detection system may obtain image information collected by the image shooting apparatus outside the cockpit. The image shooting apparatus may include a front-view camera, a rear-view camera, and two side-view cameras (located on a left side and a right side of a vehicle respectively). The four cameras may be further configured with fish-eye lenses. The front-view camera, the rear-view camera, the camera on the left side of the vehicle, and the camera on the right side of the vehicle may respectively output, to the parking space detection system, image information of the front of the vehicle, image information of the rear of the vehicle, image information of the left side of the vehicle, and image information of the right side of the vehicle. The parking space detection system may combine the image information from the four cameras through inverse perspective mapping (inverse perspective mapping, IPM) to generate an IPM image.

The parking space detection system may perform feature extraction on the IPM image. For example, the parking space detection system may input the IPM image to a U network (UNET) for feature extraction. The U network outputs one semantic feature for each pixel in the IPM image. The semantic feature includes but is not limited to a parking space obtained through conversion based on a stationary vehicle, a visually detected parking space, a speed bump, a pillar, and another obstacle.

The parking space obtained through conversion based on the stationary vehicle may be understood as a parking space obtained through conversion based on a stationary vehicle parked on the ground. There may be or may be no parking space at a location where the vehicle is parked. The visually detected parking space may be understood as a parking space accurately collected by using the image shooting apparatus.

It should be understood that a process in which the parking space detection system outputs the semantic feature by using the IPM image may also be understood as a process in which the parking space detection system constructs a semantic layer.

After feature extraction is performed on the IPM image, the parking space detection system may start to construct an image of the parking space. The parking space detection system determines a position of the vehicle in a vehicle coordinate system by using the IMU and the wheel speed odometer. The position in the vehicle coordinate system may be a current position of the vehicle relative to a position at which the vehicle just enters the parking lot (for example, the position at which the vehicle just enters the parking lot may be an origin in the vehicle coordinate system). Alternatively, the parking space detection system may determine an absolute position of the vehicle in a world coordinate system by using the global positioning system. The vehicle can construct a positioning layer by using the global positioning system, the IMU, and the wheel speed odometer.

The parking space detection system may construct the parking lot map by matching the positioning layer and the semantic layer. The parking space map shown in FIG. 2 includes the parking spaces obtained through conversion based on the stationary vehicles and parking spaces detected by using the image shooting apparatus (or visually detected parking spaces). It can be learned that the parking spaces obtained through conversion based on the stationary vehicles and the visually detected parking spaces are disordered and not aligned. If the vehicle circles the parking lot for a plurality of times, parking spaces may overlap.

Embodiments of this application provide a map construction method and apparatus, and a vehicle. Alignment of parking spaces is automatically completed by collecting data of the parking lot online. Effect of the alignment of the parking spaces is beautiful, and there is no need to manually perform modification again. This helps improve efficiency of repairing the parking space, reduce labor costs, and improve an intelligence degree of a vehicle. In addition, the vehicle may perform automatic parking (for example, automated valet parking (automated valet parking, AVP)) by using a repaired parking lot map, to help improve driving experience of a user.

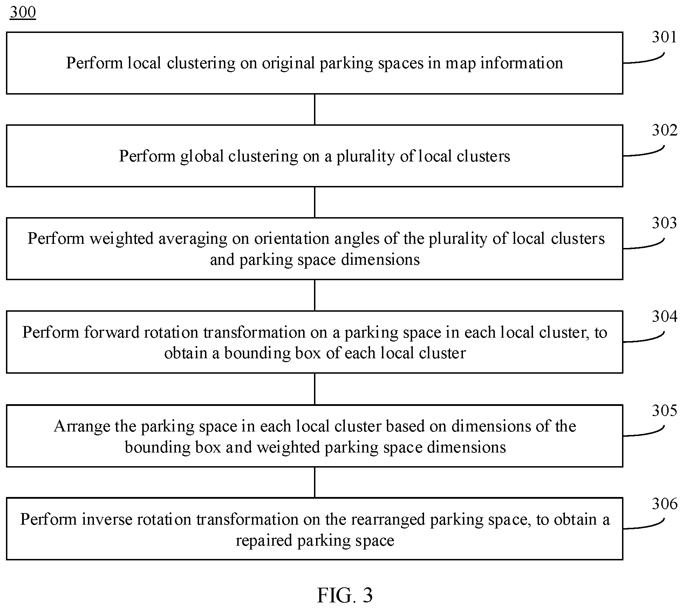

FIG. 3 is a schematic flowchart of a map construction method 300 according to an embodiment of this application. The method 300 may be performed by a vehicle, the method 300 may be performed by the foregoing computing platform, the method 300 may be performed by a system on a chip (system-on-a-chip, SoC) in the computing platform, the method 300 may be performed by the processor in the computing platform, or the method 300 may be performed by a server. The method 300 includes the following steps.

S301: Perform local clustering on original parking spaces in map information.

In an embodiment, performing clustering on the original parking spaces to obtain a plurality of local clusters includes performing local clustering on the original parking spaces by using a k-nearest neighbors (K-nearest neighbors, KNN) algorithm or a data structure such as a union-find set.

In an embodiment, the original parking spaces may include the parking spaces obtained through conversion based on the stationary vehicles and the visually detected parking spaces in FIG. 2.

In an embodiment, local clustering may be performed on parking spaces that meet one or more of the following conditions:
(1) a distance between the parking spaces is less than or equal to a preset distance (for example, 0.5 meter);
(2) orientations of the parking spaces are approximately the same or opposite, for example, a difference between orientation angles of the parking spaces is less than or equal to 10°.

For example, the orientation angle of the parking space may be an included angle between an opening orientation of the parking space and a preset direction (for example, an X axis pointing horizontally to the right).

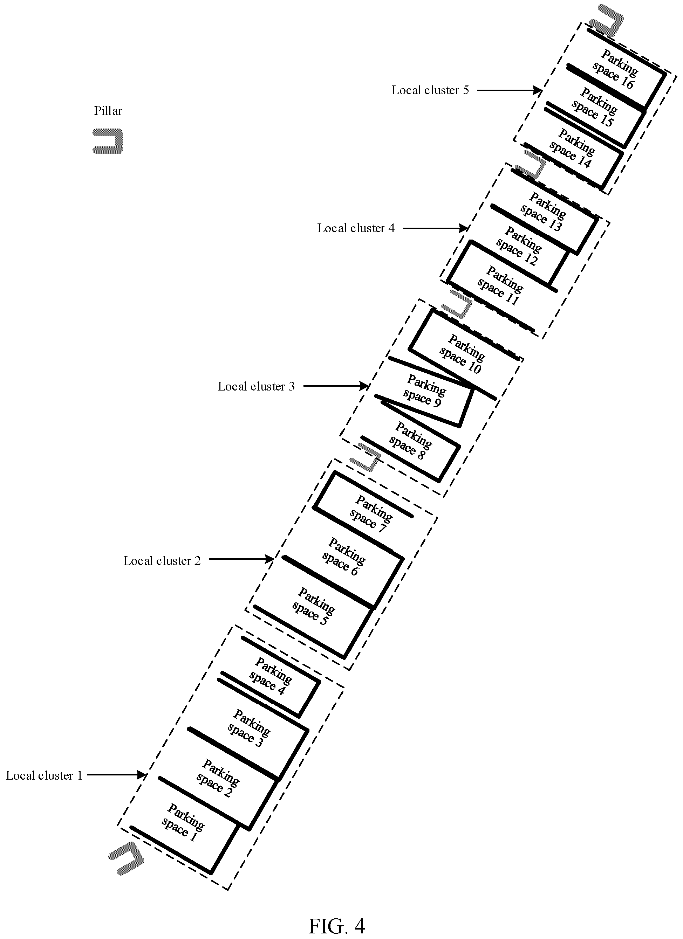

FIG. 4 is a diagram of five local clusters according to an embodiment of this application. A distance between a parking space 4 and a parking space 5 is greater than 0.5 meter, a parking space 7 and a parking space 8 are separated by a pillar, a parking space 10 and a parking space 11 are separated by a pillar, and a parking space 13 and a parking space 14 are separated by a pillar. In this case, parking spaces 1 to 16 may be classified into a local cluster 1, a local cluster 2, a local cluster 3, a local cluster 4, and a local cluster 5. The local cluster 1 includes the parking spaces 1 to 4, the local cluster 2 includes the parking spaces 5 to 7, the local cluster 3 includes the parking spaces 8 to 10, the local cluster 4 includes the parking spaces 11 to 13, and the local cluster 5 includes the parking spaces 14 to 16.

S302: Perform global clustering on the plurality of local clusters.

In an embodiment, the plurality of local clusters may be local clusters that meet a preset condition. For example, a difference between orientation angles of the local clusters is less than or equal to 10°.

The orientation angle of the local cluster may be a weighted average value of orientation angles of a plurality of parking spaces in the local cluster. For example, in the local cluster 1, an orientation angle of the parking space 1 is 81°, an orientation angle of the parking space 2 is 81°, an orientation angle of the parking space 3 is 81°, and an orientation angle of the parking space 4 is 77°. In this case, an orientation angle of the local cluster 1 is 80°.

S303: Perform weighted averaging on the orientation angles of the plurality of local clusters and parking space dimensions.

For example, the orientation angle of the local cluster 1 is 80°, an orientation angle of the local cluster 2 is 80°, an orientation angle of the local cluster 3 is 83°, an orientation angle of the local cluster 4 is 79°, and an orientation angle of the local cluster 5 is 78°. In this case, a weighted average orientation angle is 80°.

For example, weighted averaging may be performed on dimensions of the parking space 1 to the parking space 16. A weighted average dimension in a length direction is 5.2 meters, and a weighted average dimension in a width direction is 2.3 meters.

S304: Perform forward rotation transformation on a parking space in each local cluster, to obtain a bounding box (edge) of each local cluster.

S305: Arrange the parking space in each local cluster based on dimensions of the bounding box and weighted parking space dimensions.

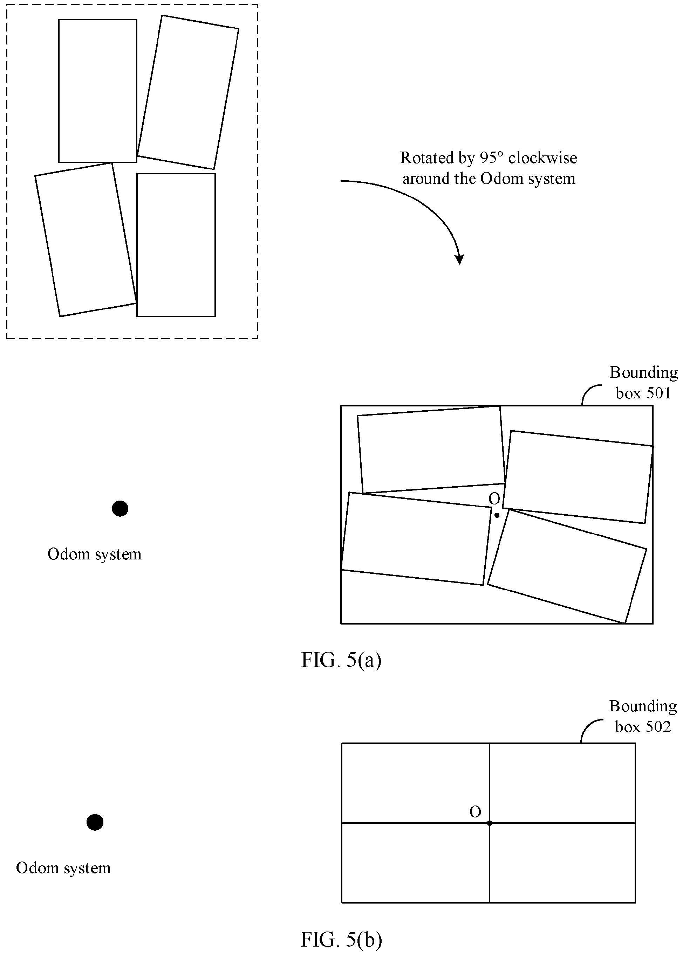

In an embodiment, the bounding box may be obtained by performing forward rotation transformation on the parking space in the local cluster. Quantities of rows and columns of parking spaces in the local cluster, for example, quantities of rows and columns of parking spaces that can be included in the bounding box, are determined based on the weighted parking space dimensions in S303. FIG. 5(a) to FIG. 5(c) are diagrams of performing forward rotation transformation and inverse rotation transformation on a local cluster a.

As shown in FIG. 5(a), for example, an orientation angle obtained by performing global clustering on the plurality of local clusters in S303 is 95°. Forward rotation transformation (clockwise rotation by 95°) is performed on all parking spaces in the local cluster a around an Odom system (a global coordinate system of a map), to obtain a bounding box 501. The bounding box 501 is a rectangular box including outermost points of a plurality of parking spaces in the local cluster a. The bounding box 501 may be a rectangular box centered on a point O with a length of 11.2 meters and a width of 5 meters. The weighted length of the parking space obtained through calculation in S303 is 5.2 meters, and the weighted width of the parking space obtained through calculation in S303 is 2.3 meters. In this case, the length of the bounding box 501 divided by the weighted length of the parking space yields 2.15, and the width of the bounding box 501 divided by the weighted width of the parking space yields 2.17. It is learned, through rounding-off, that the bounding box 501 includes two rows and two columns of parking spaces.

The foregoing is described by using an example in which the bounding box 501 is the rectangular box including the outermost points of the plurality of parking spaces in the local cluster a. Embodiments of this application are not limited thereto.

For example, the bounding box 501 may alternatively be a rectangular box obtained by scaling, by a preset factor (for example, 0.9 or 1.1), the rectangular box including the outermost points of the plurality of parking spaces in the local cluster a.

For another example, the bounding box 501 may alternatively be a rectangular box obtained by outwardly extending, by a preset length, the rectangular box including the outermost points of the plurality of parking spaces in the local cluster a (for example, outwardly extending both the length and the width by 0.1 m).

For another example, the bounding box 501 may alternatively be a rectangular box obtained by inwardly extending, by a preset length, the rectangular box including the outermost points of the plurality of parking spaces in the local cluster a (for example, inwardly extending both the length and the width by 0.1 m).

As shown in FIG. 5(b), after it is determined that the bounding box 501 includes two rows and two columns of parking spaces, the dimensions of the bounding box 501 may be adjusted, to obtain a bounding box 502. The bounding box 502 and the bounding box 501 may be both centered on the point O, and the bounding box 502 has a length of 10.4 meters and a width of 4.6 meters.

S306: Perform inverse rotation transformation on the rearranged parking space, to obtain a repaired parking space.

The inverse rotation transformation may also be referred to as reverse rotation transformation.

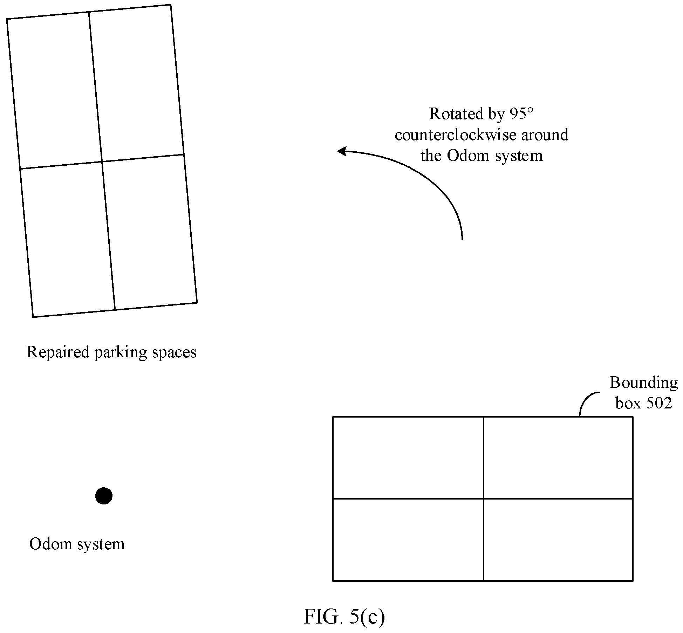

As shown in FIG. 5(c), after the bounding box 502 is obtained, inverse rotation transformation (inverse rotation by 95°) may be performed on the bounding box 502 around the Odom system, to obtain repaired parking spaces.

In an embodiment, when two adjacent bounding boxes overlap, at least some of the two bounding boxes are adjusted, so that the two bounding boxes do not overlap.

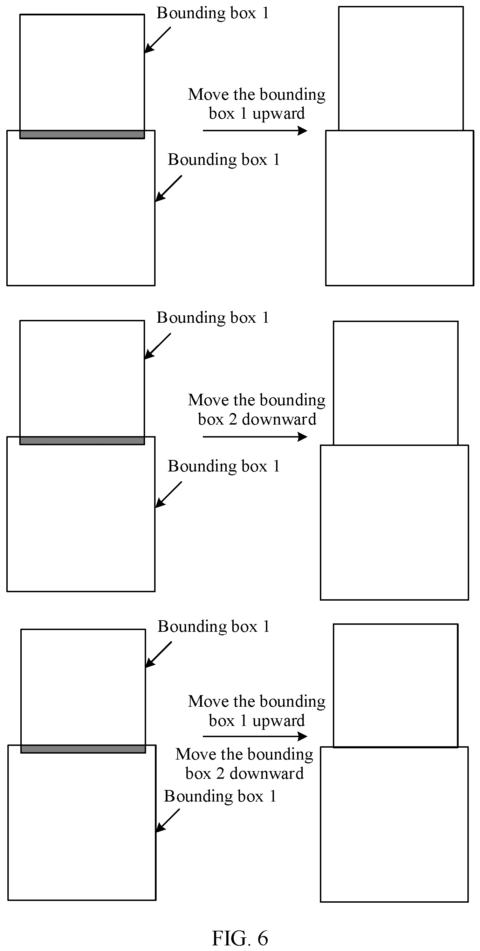

FIG. 6 is a diagram of causing a bounding box 1 and a bounding box 2 not to overlap according to an embodiment of this application. As shown in FIG. 6, when the bounding box 1 and the bounding box 2 overlap, at least one of the bounding box 1 and the bounding box 2 may be adjusted.

For example, the bounding box 2 may be kept still and the bounding box 1 may be moved upward until the bounding box 1 and the bounding box 2 do not overlap.

For another example, the bounding box 1 may be kept still and the bounding box 2 may be moved downward until the bounding box 1 and the bounding box 2 do not overlap.

For another example, the bounding box 1 may be moved upward and the bounding box 2 may be moved downward until the bounding box 1 and the bounding box 2 do not overlap.

In an embodiment, adjustment of the bounding box 1 and/or the bounding box 2 may be further determined based on weights of the parking spaces. For example, the bounding box 1 includes three parking spaces, where the three parking spaces are all visually detected parking spaces; and the bounding box 2 includes three parking spaces, where the three parking spaces are all parking spaces obtained through conversion based on stationary vehicles. In this case, a weight of the parking space in the bounding box 1 may be set to be greater than a weight of the parking space in the bounding box 2, so that the bounding box 1 can be kept still and the bounding box 2 can be moved downward.

In an embodiment, the method further includes aligning bounding boxes corresponding to the plurality of local clusters along a preset direction.

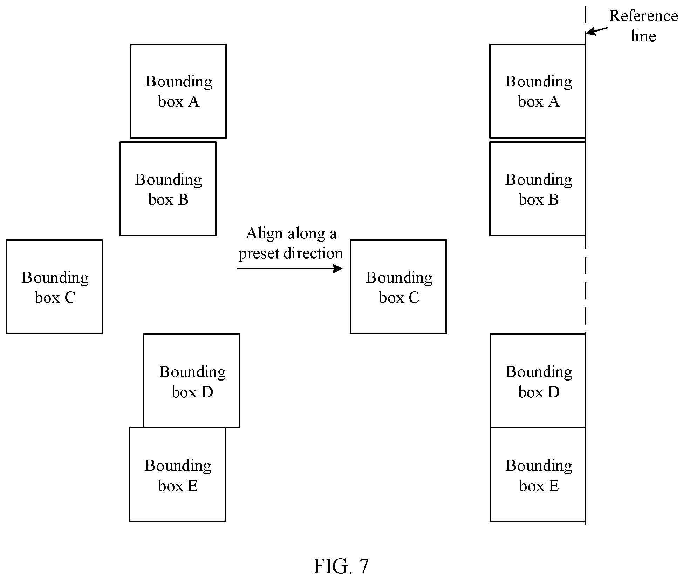

FIG. 7 is a diagram of aligning five bounding boxes according to an embodiment of this application.

As shown in FIG. 7, when distance differences between right contour lines of a bounding box A, a bounding box B, a bounding box D, and a bounding box E each are less than a preset width (for example, 0.5 meter), but distance differences between a right contour line of a bounding box C and the right contour lines of the bounding box A, the bounding box B, the bounding box D, and the bounding box E each are greater than the preset width, it may be considered that a local cluster corresponding to the bounding box C is a local cluster that needs to be separately arranged, and local clusters corresponding to the bounding box A, the bounding box B, the bounding box D, and the bounding box E are local clusters that need to be aligned.

In an embodiment, a specific contour line of a specific bounding box may be selected as a reference line, and another bounding box may be aligned to the reference line; or a reference line may be determined based on deviations between corresponding contour lines in a plurality of bounding boxes; or a specific preset direction may be selected as a reference line, and a plurality of bounding boxes may be aligned to the preset direction.

For example, if a weight of a parking space in the local cluster corresponding to the bounding box A is greater than a weight of a parking space in a local cluster corresponding to another bounding box, a rightmost contour line of the bounding box A may be used as a reference line. For example, the rightmost contour line of the bounding box A is used as the reference line. In this case, the right contour lines of the bounding box B, the bounding box D, and the bounding box E are all aligned to the reference line.

In an embodiment, the parking spaces are arranged in the bounding box based on the weighted parking space dimensions, and the parking spaces obtained through inverse rotation transformation are matched with the original parking spaces.

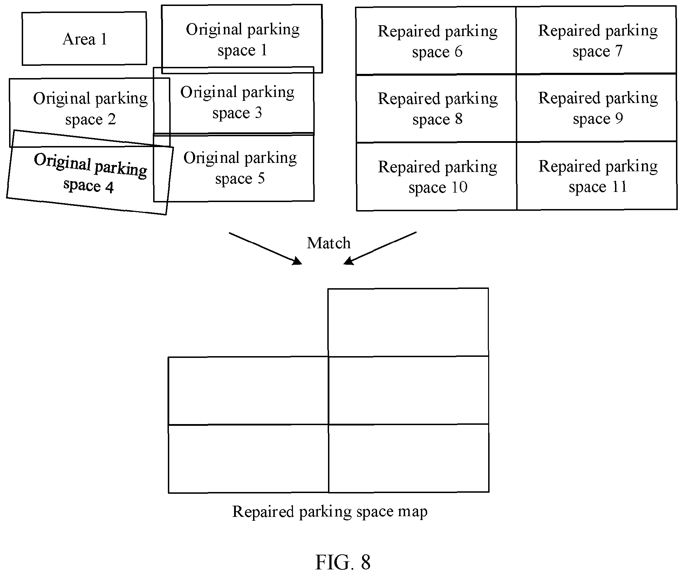

FIG. 8 is a diagram of matching a parking space obtained through inverse rotation with an original parking space according to an embodiment of this application.

For example, original parking spaces 1 to 5 are detected through a parking space detection system and a positioning system, there is no parking space in an area 1, and repaired parking spaces 6 to 11 are obtained through inverse rotation transformation. A distance between a center point of the parking space 6 and a center point of any one of the original parking spaces 1 to 5 is greater than a preset distance (for example, 2 meters). Therefore, it may be considered that there is actually no parking space at a location of the parking space 6. A distance between a center point of the repaired parking space 7 and a center point of the original parking space 1 is less than the preset distance. Therefore, it may be considered that the repaired parking space 7 and the original parking space 1 match. A distance between a center point of the repaired parking space 8 and a center point of the original parking space 2 is less than the preset distance. Therefore, it may be considered that the repaired parking space 8 and the original parking space 2 match. A distance between a center point of the repaired parking space 9 and a center point of the original parking space 3 is less than the preset distance. Therefore, it may be considered that the repaired parking space 9 and the original parking space 3 match. A distance between a center point of the repaired parking space 10 and a center point of the original parking space 4 is less than the preset distance. Therefore, it may be considered that the repaired parking space 10 and the original parking space 4 match. A distance between a center point of the repaired parking space 11 and a center point of the original parking space 5 is less than the preset distance. Therefore, it may be considered that the repaired parking space 11 and the original parking space 5 match.

After matching, a finally repaired parking space map may be obtained.

In an embodiment, the method 300 further includes: when dimensions that are of one or more parking spaces between two specific adjacent obstacles on the repaired parking lot map and that are in a first direction (for example, in a direction of a connection line between the two obstacles) each are greater than a dimension between the two obstacles, modifying, based on the distance between the two obstacles, the dimensions of the one or more parking spaces in the first direction.

For example, the dimension of the parking space in the width direction determined in S303 is 2.3 meters, there are two adjacent pillars on the repaired parking space map, and three parking spaces are included between the two adjacent pillars. It is detected through an image shooting apparatus or a lidar that a distance between the two pillars is 6.3 meters. Therefore, dimensions that are of the parking spaces between the two pillars and that are in the width direction each are adjusted from 2.3 meters to 2.1 meters.

In an embodiment, the method 300 further includes: deleting an abnormal parking space far away from a road.

The abnormal parking space may be a parking space that is not accessible by road or a parking space where a vehicle cannot park.

In an embodiment, the method 300 further includes: adjusting opening orientations of all parking spaces to face an actual road.

In an embodiment, the method 300 further includes: aligning associated elements in the parking spaces.

For example, if the parking space includes associated elements (which may be elements at four corners) such as a wheel stop and a parking lock, the associated elements may be arranged at fixed locations in the parking space.

For example, the wheel stop is located in the middle of the parking space, the parking lock is located at the rear 4/5 of the parking space, and the opening orientation may be consistent with that of the parking space. In this way, alignment of the associated elements can be implemented, and aesthetics of the parking lot map can be further improved.

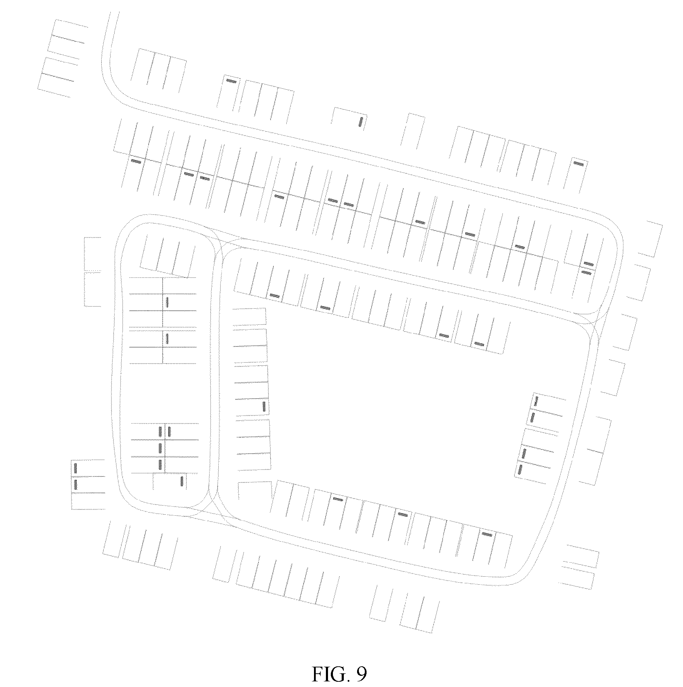

FIG. 9 is a diagram of a repaired parking lot map according to an embodiment of this application. It may be learned that orientation angles of local parking spaces are consistent and boundaries of the parking spaces are aligned. Opening orientations of global parking spaces all face the road. If there are associated elements such as the parking lock and the wheel stop, the associated elements may be arranged in a specific fixed location in the parking space and may be consistent with an alignment status of the parking space.

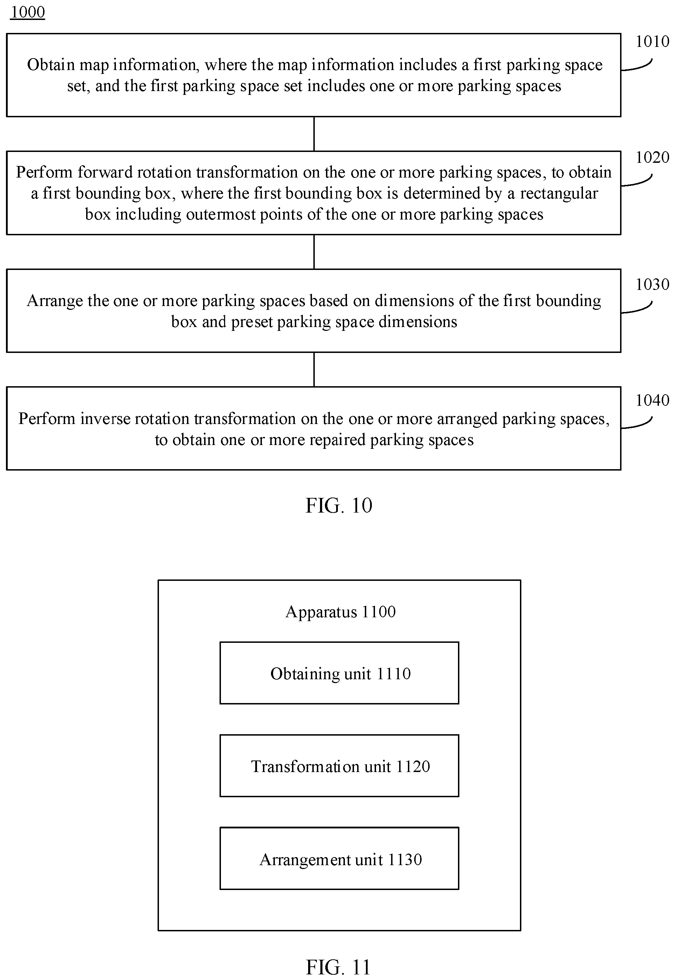

FIG. 10 is a schematic flowchart of a map construction method 1000 according to an embodiment of this application. The method 1000 may be performed by a vehicle, the method 1000 may be performed by a computing platform in a vehicle, the method 1000 may be performed by an SoC in the computing platform, the method 1000 may be performed by a processor in the computing platform, or the method 1000 may be performed by a server. As shown in FIG. 10, the method 1000 includes the following steps.

S1010: Obtain map information, where the map information includes a first parking space set, and the first parking space set includes one or more parking spaces.

In an embodiment, obtaining the map information includes obtaining the map information based on data collected by a sensor of the vehicle.

In an embodiment, obtaining the map information includes obtaining, in a process of automatic parking of the vehicle, the map information based on data collected by the sensor of the vehicle.

For example, the one or more parking spaces may include a parking space obtained through conversion based on a stationary vehicle and/or a visually detected parking space.

In an embodiment, when the one or more parking spaces are the plurality of parking spaces, a distance between any two adjacent parking spaces in the plurality of parking spaces is less than or equal to a preset distance, and/or a difference between orientation angles of any two of the plurality of parking spaces is less than or equal to a preset angle.

S1020: Perform forward rotation transformation on the one or more parking spaces, to obtain a first bounding box, where the first bounding box is determined by a rectangular box including outermost points of the one or more parking spaces.

In an embodiment, the first bounding box includes outermost vertices of the one or more parking spaces in the first parking space set.

In an embodiment, the first bounding box is obtained by outwardly extending, by a preset distance, the rectangular box including the one or more outermost vertices of the one or more parking spaces in the first parking space set (for example, outwardly extending both a length and a width by 0.1 m), is obtained by inwardly extending the rectangular box by the preset distance (for example, inwardly extending both a length and a width by 0.1 m), or is obtained by multiplying dimensions of the rectangular box by a preset rate (for example, 0.9 or 1.1).

For example, the one or more parking spaces are parking spaces in a local cluster shown in FIG. 5(a) to FIG. 5(c), and the first bounding box may be the foregoing bounding box 501.

S1030: Arrange the one or more parking spaces based on dimensions of the first bounding box and preset parking space dimensions.

In an embodiment, arranging the one or more parking spaces based on the dimensions of the first bounding box and the preset parking space dimensions includes: determining, based on the dimensions of the first bounding box and the preset parking space dimensions, quantities of rows and columns of parking spaces included in the first bounding box; and arranging the one or more parking spaces based on the quantities of rows and columns of the parking spaces included in the first bounding box.

The quantity of rows of parking spaces included in the first bounding box may also be understood as a quantity of rows of the parking spaces.

For example, as shown in FIG. 5(b), when it is determined, based on dimensions of a bounding box 501 and the preset parking space dimensions, that parking spaces in the bounding box are arranged in two rows and two columns, parking spaces in the bounding box may be rearranged.

For example, the preset parking space dimensions are dimensions obtained through weighted averaging performed on dimensions of all parking spaces on the map; the preset parking space dimensions are dimensions obtained through weighted averaging performed on dimensions of the one or more parking spaces; or a length of a parking space and a width of a parking space in the preset parking space dimensions are preset values (for example, a length and a width of a standard parking space).

S1040: Perform inverse rotation transformation on the one or more arranged parking spaces, to obtain one or more repaired parking spaces.

For example, as shown in FIG. 5(c), inverse rotation transformation (inverse rotation by 95°) may be performed on parking spaces in the bounding box 502 around an Odom system, and then the repaired parking space is obtained.

In an embodiment, the method further includes: obtaining a second parking space set, where the second parking space set includes one or more parking spaces, performing forward rotation transformation on the one or more parking spaces in the second parking space set, to obtain a second bounding box; and when the first bounding box and the second bounding box overlap, adjusting the first bounding box and/or the second bounding box, to cause the first bounding box and the second bounding box not to overlap.

In an embodiment, the second bounding box is determined by a rectangular box including outermost points of the one or more parking spaces in the second parking space set.

For the process of obtaining the second parking space set, refer to the process of obtaining the first parking space set. Details are not described herein again.

In an embodiment, the method 1000 further includes: aligning the first bounding box with the second bounding box along a preset direction.

For example, the preset direction is a first side of the first bounding box, or the preset direction is a second side of the second bounding box.

For example, when a quantity of visually detected parking spaces in the first bounding box is greater than a quantity of visually detected parking spaces in the second bounding box, the preset direction may be determined as the first side of the first bounding box.

In an embodiment, the method 1000 further includes: when opening orientations of at least some parking spaces of the one or more parking spaces do not correspond to a direction of a road, adjusting the opening orientations of the at least some parking spaces to correspond to the direction of the road.

In an embodiment, the method 1000 further includes: when there are associated elements in the at least some of the one or more parking spaces, aligning the associated elements in the at least some parking spaces.

For example, the associated element includes but is not limited to a parking lock, a wheel stop, and the like.

In an embodiment, the method 1000 further includes: controlling a vehicle-mounted display screen to display the map information, where the map information includes the one or more repaired parking spaces.

In the foregoing embodiment, an example in which forward rotation transformation is first performed and then inverse rotation transformation is performed is used for description. This embodiment of this application is not limited thereto. For example, inverse rotation transformation may be performed first to obtain the first bounding box, and then the one or more parking spaces is rearranged based on the dimensions of the first bounding box and the preset parking space dimensions. After the one or more parking spaces are rearranged, forward rotation transformation is performed, to obtain a repaired parking space.

In this embodiment of this application, forward rotation transformation is performed on the one or more parking spaces, to obtain the first bounding box. The repaired parking space may be obtained by rearranging the parking spaces based on the dimensions of the bounding box and the preset parking space dimensions and performing inverse rotation transformation. In this way, there is no need to repair the parking space on the map through offline repair, which helps reduce labor costs. In addition, it helps improve aesthetics and accuracy of a constructed map, and also helps improve an intelligence degree of the vehicle.

An embodiment of this application further provides an apparatus for implementing any one of the foregoing methods, for example, provides an apparatus including units (or means) configured to implement steps performed by a vehicle or a computing platform in the vehicle in any one of the foregoing methods.

FIG. 11 is a block diagram of a map construction apparatus 1100 according to an embodiment of this application. The apparatus 1100 includes: an obtaining unit 1110, configured to obtain map information, where the map information includes a first parking space set, and the first parking space set includes one or more parking spaces; a transformation unit 1120, configured to perform forward rotation transformation on the one or more parking spaces, to obtain a first bounding box, where the first bounding box is determined by a rectangular box including outermost points of the one or more parking spaces; and an arrangement unit 1130, configured to arrange the one or more parking spaces based on dimensions of the first bounding box and preset parking space dimensions. The transformation unit 1120 is further configured to perform inverse rotation transformation on the one or more arranged parking spaces, to obtain one or more repaired parking spaces.

Optionally, the arrangement unit 1130 is configured to: determine, based on the dimensions of the first bounding box and the preset parking space dimensions, quantities of rows and columns of parking spaces included in the first bounding box; and arrange the one or more parking spaces based on the quantities of rows and columns of the parking spaces included in the first bounding box.

Optionally, the map information further includes a second parking space set, and the second parking space set includes one or more parking spaces. The transformation unit 1120 is further configured to perform forward rotation transformation on the one or more parking spaces in the second parking space set, to obtain a second bounding box. The apparatus 1100 further includes: a first adjustment unit, further configured to adjust the first bounding box and/or the second bounding box when the first bounding box and the second bounding box overlap, to cause the first bounding box and the second bounding box not to overlap.

Optionally, the apparatus 1100 further includes a first alignment unit, configured to align the first bounding box with the second bounding box along a preset direction.

Optionally, the apparatus 1100 further includes: a determining unit, configured to: before the one or more repaired parking spaces are obtained, determine that the one or more repaired parking spaces and the one or more parking spaces before repair match.

Optionally, the apparatus 1100 further includes a second adjustment unit, configured to: when opening orientations of at least some parking spaces of the one or more parking spaces do not correspond to a direction of a road, adjust the opening orientations of the at least some parking spaces to correspond to the direction of the road.

Optionally, the apparatus 1100 further includes a second alignment unit, configured to align associated elements in the one or more parking spaces. The associated element includes a parking lock and/or a wheel stop.

Optionally, the apparatus 1100 further includes a third adjustment unit, configured to: when the one or more parking spaces are located between two obstacles, adjust, based on a dimension between the two obstacles, dimensions of the one or more parking spaces in a first direction. The first direction corresponds to a direction of a connection line between the two obstacles.

Optionally, the obtaining unit 1110 is configured to obtain the first parking space set from the map information according to a k-nearest neighbors algorithm or a union-find algorithm.

Optionally, the obtaining unit 1110 is configured to obtain the map information when automatic parking of a vehicle is detected.

For example, the obtaining unit 1110 may be the computing platform in FIG. 1, or a processing circuit, a processor, or a controller in the computing platform. For example, the obtaining unit 1110 is a processor 151 in the computing platform, and the processor 151 may obtain map information. For example, in an automatic parking process of a vehicle, the processor 151 may construct the map information based on data collected by an image shooting apparatus and a radar.

For example, the transformation unit 1120 may be the computing platform in FIG. 1 or a processing circuit, a processor, or a controller in the computing platform. For example, the transformation unit 1120 is a processor 152 in the computing platform. The processor 152 may perform forward rotation transformation on one or more parking spaces in map information, to obtain a bounding box. For another example, the processor 152 may further perform inverse rotation transformation on one or more rearranged parking spaces, to obtain one or more repaired parking spaces.

For example, the arrangement unit 1130 may be the computing platform in FIG. 1 or a processing circuit, a processor, or a controller in the computing platform. For example, the arrangement unit 1130 is a processor 153 in the computing platform. The processor 153 may rearrange one or more parking spaces based on dimensions of a bounding box and preset parking space dimensions, to obtain the one or more arranged parking spaces.

The function implemented by the obtaining unit 1110, the function implemented by the transformation unit 1120, and the function implemented by the arrangement unit 1130 may be separately implemented by different processors, or may be implemented by a same processor. This is not limited in embodiments of this application.

It should be understood that division into the units in the apparatus is merely division of logical functions. During actual implementation, all or some of the units may be integrated into one physical entity, or may be physically separated. In addition, a unit in the apparatus may be implemented in a form of processor invoking software. For example, the apparatus includes a processor, the processor is connected to a memory, the memory stores instructions, and the processor invokes the instructions stored in the memory, to perform any one of the foregoing methods or implement functions of units in the apparatus. For example, the processor is a general-purpose processor, such as a CPU or a microprocessor. The memory is a memory inside the apparatus or a memory outside the apparatus. Alternatively, the unit in the apparatus may be implemented in a form of hardware circuit, and functions of some or all units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The FPGA may include a large quantity of logic gate circuits, and a connection relationship between the logic gate circuits is configured by using a configuration file, to implement functions of some or all of the foregoing units. All units of the apparatus may be implemented in a form of software invoked by a processor, or may be implemented in a form of hardware circuit. Alternatively, some units are implemented in a form of software invoked by a processor, and remaining units are implemented in a form of hardware circuit.

In embodiments of this application, the processor is a circuit having a signal processing capability. In an implementation, the processor may be a circuit having an instruction reading and running capability, for example, a CPU, a microprocessor, a GPU, or a DSP. In another implementation, the processor may implement a specific function by using a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may be a hardware circuit designed for artificial intelligence, and may be understood as an ASIC, for example, an NPU, a TPU, or a DPU.

It can be learned that the units in the apparatus may be configured as one or more processors (or processing circuits) for implementing the foregoing methods, for example, a CPU, a GPU, an NPU, a TPU, a DPU, a microprocessor, a DSP, an ASIC, an FPGA, or a combination of at least two of these processor forms.

In addition, all or some of the units in the apparatus may be integrated, or may be implemented independently. In an implementation, these units are integrated together and implemented in a form of SoC. The SoC may include at least one processor, configured to implement any one of the methods or implement functions of the units in the apparatus. Types of the at least one processor may be different, for example, the at least one processor includes a CPU and an FPGA, a CPU and an artificial intelligence processor, or a CPU and a GPU.

An embodiment of this application further provides an apparatus. The apparatus includes a processing unit and a storage unit. The storage unit is configured to store instructions, and the processing unit executes the instructions stored in the storage unit, so that the apparatus performs the methods or steps performed in the foregoing embodiments.

Optionally, if the apparatus is located in a vehicle, the processing unit may be the processors 151 to 15n shown in FIG. 1.

An embodiment of this application further provides a map construction system. The map construction system may include a sensor and a computing platform. The computing platform may include the foregoing map construction apparatus 1100.

An embodiment of this application further provides a server. The server may include the foregoing map construction apparatus 1100.

For example, a vehicle may send, to the server in a process of automatic parking, data collected by a sensor, and the server may construct map information based on the data collected by the sensor. The server may further repair one or more parking spaces in the map information. The server may send map information with a repaired parking space to the vehicle. Therefore, the vehicle may display repaired map information through a vehicle-mounted display screen.

An embodiment of this application further provides a vehicle. The vehicle may include the foregoing map construction apparatus or the foregoing map construction system.

An embodiment of this application further provides a computer program product. The computer program product includes computer program code. When the computer program code is run on a computer, the computer is enabled to perform the foregoing method.

An embodiment of this application further provides a computer readable medium. The computer readable medium stores program code. When the computer program code is run on a computer, the computer is enabled to perform the foregoing method.

During implementation, steps in the foregoing method may be implemented by using a hardware integrated logic circuit in a processor, or by using instructions in a form of software. The method disclosed with reference to embodiments of this application may be directly performed by a hardware processor, or may be performed by using a combination of the hardware in the processor and a software module. The software module may be located in a mature storage medium in the art, such as a random access memory, a flash memory, a read-only memory, a programmable read-only memory, an electrically erasable programmable memory, or a register. The storage medium is located in a memory. The processor reads information in the memory and completes the steps in the foregoing method in combination with the hardware of the processor. To avoid repetition, details are not described herein again.

It should be understood that, in this embodiment of this application, the memory may include the read-only memory and the random access memory, and provide instructions and data to the processor.

It should be further understood that sequence numbers of the foregoing processes do not mean execution sequences in various embodiments of this application. The execution sequences of the processes should be determined based on functions and internal logic of the processes, and should not constitute any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing system, apparatus, and unit, refer to corresponding processes in the foregoing method embodiment. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one place, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A map construction method, comprising:
obtaining map information, wherein the map information comprises a first parking space set, and the first parking space set comprises one or more parking spaces;
performing forward rotation transformation on the one or more parking spaces, to obtain a first bounding box, wherein the first bounding box is determined by a rectangular box comprising outermost points of the one or more parking spaces;
arranging the one or more parking spaces based on dimensions of the first bounding box and preset parking space dimensions; and
performing inverse rotation transformation on the one or more arranged parking spaces, to obtain one or more repaired parking spaces.

2. The method according to claim 1, wherein the arranging the one or more parking spaces based on dimensions of the first bounding box and preset parking space dimensions comprises:
determining, based on the dimensions of the first bounding box and the preset parking space dimensions, quantities of rows and columns of parking spaces comprised in the first bounding box; and
arranging the one or more parking spaces based on the quantities of rows and columns of the parking spaces comprised in the first bounding box.

3. The method according to claim 1 or 2, wherein the map information further comprises a second parking space set, the second parking space set comprises one or more parking spaces, and the method further comprises:
performing forward rotation transformation on the one or more parking spaces in the second parking space set, to obtain a second bounding box; and
adjusting the first bounding box and/or the second bounding box when the first bounding box and the second bounding box overlap, to cause the first bounding box and the second bounding box not to overlap.

4. The method according to claim 3, wherein the method further comprises:
aligning the first bounding box with the second bounding box along a preset direction.

5. The method according to any one of claims 1 to 4, wherein before the one or more repaired parking spaces are obtained, the method further comprises:
determining that the one or more repaired parking spaces and the one or more parking spaces before repair match.

6. The method according to any one of claims 1 to 5, wherein the method further comprises:
when opening orientations of at least some of the one or more parking spaces do not correspond to a direction of a road, adjusting the opening orientations of the at least some parking spaces to correspond to the direction of the road.

7. The method according to any one of claims 1 to 6, wherein the method further comprises:
aligning associated elements in the one or more parking spaces, wherein the associated element comprises a parking lock and/or a wheel stop.

8. The method according to any one of claims 1 to 7, wherein the method further comprises:
when the one or more parking spaces are located between two obstacles, adjusting, based on a dimension between the two obstacles, dimensions of the one or more parking spaces in a first direction, wherein the first direction corresponds to a direction of a connection line between the two obstacles.

9. The method according to any one of claims 1 to 8, wherein the method further comprises:
obtaining the first parking space set from the map information according to a k-nearest neighbors algorithm or a union-find algorithm.

10. The method according to any one of claims 1 to 9, wherein the obtaining map information comprises:
obtaining the map information when automatic parking of a vehicle is detected.

11. A map construction apparatus, comprising:
an obtaining unit, configured to obtain map information, wherein the map information comprises a first parking space set, and the first parking space set comprises one or more parking spaces;
a transformation unit, configured to perform forward rotation transformation on the one or more parking spaces, to obtain a first bounding box, wherein the first bounding box is determined by a rectangular box comprising outermost points of the one or more parking spaces; and
an arrangement unit, configured to arrange the one or more parking spaces based on dimensions of the first bounding box and preset parking space dimensions, wherein
the transformation unit is further configured to perform inverse rotation transformation on the one or more arranged parking spaces, to obtain one or more repaired parking spaces.

12. The apparatus according to claim 11, wherein the arrangement unit is configured to:
determine, based on the dimensions of the first bounding box and the preset parking space dimensions, quantities of rows and columns of parking spaces comprised in the first bounding box; and
arrange the one or more parking spaces based on the quantities of rows and columns of the parking spaces comprised in the first bounding box.

13. The apparatus according to claim 11 or 12, wherein the map information further comprises a second parking space set, and the second parking space set comprises one or more parking spaces;
the transformation unit is further configured to perform forward rotation transformation on the one or more parking spaces in the second parking space set, to obtain a second bounding box; and
the apparatus further comprises:
a first adjustment unit, configured to adjust the first bounding box and/or the second bounding box when the first bounding box and the second bounding box overlap, to cause the first bounding box and the second bounding box not to overlap.

14. The apparatus according to claim 13, wherein the apparatus further comprises:
a first alignment unit, configured to align the first bounding box with the second bounding box along a preset direction.

15. The apparatus according to any one of claims 11 to 14, wherein the apparatus further comprises:
a determining unit, configured to: before the one or more repaired parking spaces are obtained, determine that the one or more repaired parking spaces and the one or more parking spaces before repair match.

16. The apparatus according to any one of claims 11 to 15, wherein the apparatus further comprises:
a second adjustment unit, configured to: when opening orientations of at least some of the one or more parking spaces do not correspond to a direction of a road, adjust the opening orientations of the at least some parking spaces to correspond to the direction of the road.

17. The apparatus according to any one of claims 11 to 16, wherein the apparatus further comprises:
a second alignment unit, configured to align associated elements in the one or more parking spaces, wherein the associated element comprises a parking lock and/or a wheel stop.

18. The apparatus according to any one of claims 11 to 17, wherein the apparatus further comprises:
a third adjustment unit, configured to: when the one or more parking spaces are located between two obstacles, adjust, based on a dimension between the two obstacles, dimensions of the one or more parking spaces in a first direction, wherein the first direction corresponds to a direction of a connection line between the two obstacles.

19. The apparatus according to any one of claims 11 to 18, wherein the obtaining unit is further configured to:
obtain the first parking space set from the map information according to a k-nearest neighbors algorithm or a union-find algorithm.

20. The apparatus according to any one of claims 11 to 19, wherein the obtaining unit is configured to:
obtain the map information when automatic parking of a vehicle is detected.

21. A map construction apparatus, wherein the apparatus comprises:
a memory, configured to store a computer program; and
a processor, configured to execute the computer program stored in the memory, to enable the apparatus to perform the method according to any one of claims 1 to 10.

22. A map construction system, comprising a sensor and a computing platform, wherein the computing platform comprises the apparatus according to any one of claims 11 to 21.

23. A vehicle, comprising the map construction apparatus according to any one of claims 11 to 21 or the map construction system according to claim 22.

24. A computer-readable storage medium, wherein the computer-readable storage medium stores a computer program, and when the computer program is executed by a computer, the method according to any one of claims 1 to 10 is implemented.

25. A chip, comprising a circuit, wherein the circuit is configured to perform the method according to any one of claims 1 to 10.
